# EUROPEAN PATENT SPECIFICATION

(11) **EP 2 130 664 B1**
(45) Date of publication and mention of the grant of the patent: **13.07.2011**
(21) Application number: 09006937.8
(22) Date of filing: 25.05.2009
(51) Int. Cl.: B29C 57/04, B21D 41/02

(54) **Shaping tool for bell-shaping the ends of plastic tubular elements**
Formwerkzeug zum Aufweiten der Enden von Kunststoffrohren
Outil de formage pour tuliper les extrémités de tuyaux en matière plastique

(30) Priority: 04.06.2008 IT MI20081022
(43) Date of publication of application: 09.12.2009
(73) Proprietor: AQUATECHNIK GROUP S.p.A., 21052 Busto Arsizio (VA) (IT)
(72) Inventor: Petenà, Lino, 21052 Busto Arsizio Varese (IT)
(74) Representative: Coloberti, Luigi

(56) References cited:
- EP-A- 0 052 581
- EP-A- 0 878 287
- EP-A- 1 674 241
- US-A- 3 888 102
- US-A- 3 989 439
- US-A- 4 389 180
- US-A1- 2008 196 468

## Description

### BACKGROUND OF THE INVENTION

This invention concerns a shaping tool, particularly suitable for bell-shaping the ends of plastic tubular elements to be inserted and sealingly blocked onto joints for pipes used to carry liquid or gaseous fluids in sanitary, heating, air conditioning and compressed air systems; for the purposes of this description, the expression "plastic tubular element" refers to any tubular element of plastic material in a single layer, or multilayered in combination with other types of material.

### STATE OF THE ART

In general, plastic pipes for sanitary, heating, air conditioning and compressed air systems are normally manufactured by extrusion, having diameters and thicknesses with ample tolerances, which may vary from pipe to pipe during the same production process or different production processes.

In order to allow proper connection between pipes, special joints are used which must be sealingly inserted into the bell-shaped ends of the plastic pipes to be connected.

The shaping operation for bell-shaping the end of a tubular element may be performed by using known tools of various kinds; a particularly effective solution involves the use of a tool comprising a radially expandable expander, since it allows to control the expansion phase and the shape of the bell.

A tool of this kind, illustrated, for example, in US-7,128,560-B2, in particular, comprises a support body for a radially expandable expander, in which a cone-shaped wedge member axially slides in order to dilate the expander between a contracted condition and an expanded condition.

The expander comprises a plurality of angularly spaced apart expansion sectors, which, in the contracted condition, form a cylindrical body having an outer surface for deforming the tubular element.

However, a solution of this kind does not allow even expansion of the tubular element in the circumferential direction, since, when the expander is in the expanded condition, the sectors tend to become spaced apart from each other, thereby creating a series of circumferential discontinuities, in which the tubular element is not deformed in a regular or appropriate manner.

This may cause defects in the seal between the tubular elements and the joints and/or breakages or cuts in the tubular elements themselves, particularly in the layered pipes comprising aluminium, thereby causing the need to replace the damaged tubular elements or to intervene and eliminate any leakages in the systems.

Further reference is also made to EP 1 674 241 A1.

### OBJECTS OF THE INVENTION

The object of this invention is therefore to provide a shaping tool for bell-shaping the ends of plastic tubular elements, which allows to perform an extremely controlled deformation of the tubular elements, both in the circumferential direction and in the longitudinal direction, thereby obtaining an even inner diameter of the entire bell which guarantees a good seal on the fluid.

### BRIEF DESCRIPTION OF THE INVENTION

The above can be obtained by a shaping tool for bell-shaping the ends of plastic tubular elements, the tool comprising:
- a support body having a longitudinal axis;
- a radially expandable expander, axially extending from the support body and ending with a front end for insertion of a tubular element, and
- a wedge member axially sliding in the expander, the wedge member having a cone-shaped surface conformed to dilate the expander between a contracted condition and an expanded condition;
said expander comprising a plurality of angularly spaced apart expansion sectors, shaped to form an outer surface for deforming the tubular element, and a conical inner surface for contacting the wedge member,
characterised in that at least part of the expansion sectors have a rear stop member for the tubular element, the stop member being shaped with a front shoulder surface radially extending from a slot of the stop member, the slot extending along a circumference coaxially to the expander; and
by comprising an elastically yieldable contact sleeve for contacting the inner surface of the tubular element, the contact sleeve extending on said outer surface of the expansion sectors coaxially to the expander, said contact sleeve extending inside the slot of said stop members, beyond the front shoulder surface.

### BRIEF DESCRIPTION OF THE DRAWINGS

These and further features according to this invention will be more clearly evident from the following description, with reference to the accompanying figures, in which:
- Fig. 1 is a perspective view of the shaping tool according to this invention, in a contracted condition;
- Fig. 2 is a front view of the tool of Fig. 1;
- Fig. 3 is a perspective view, partially sectioned, of the shaping tool of Fig. 1; and
- Fig. 4 is a longitudinal sectional view of the tool of Fig. 1, in an expanded condition.

### DETAILED DESCRIPTION OF THE INVENTION

The general features of this invention will be described below through an embodiment.

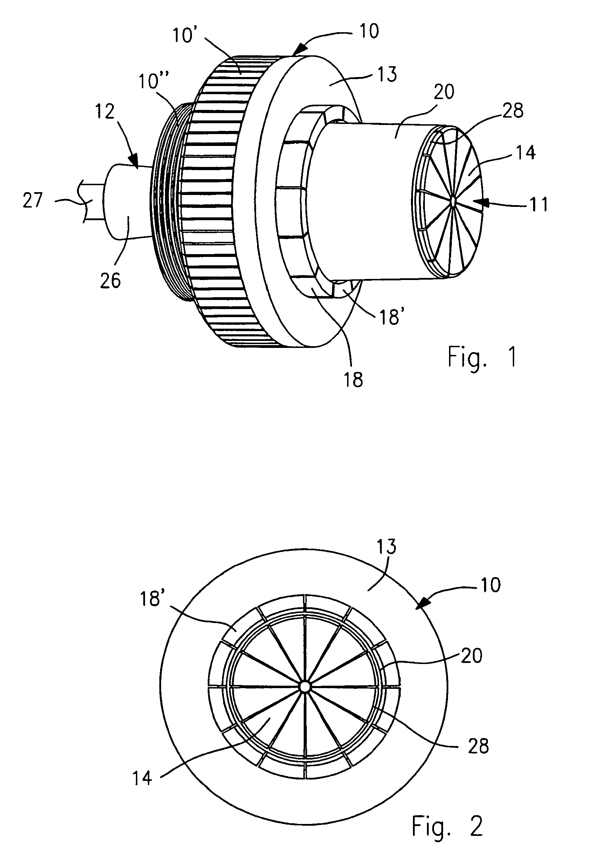

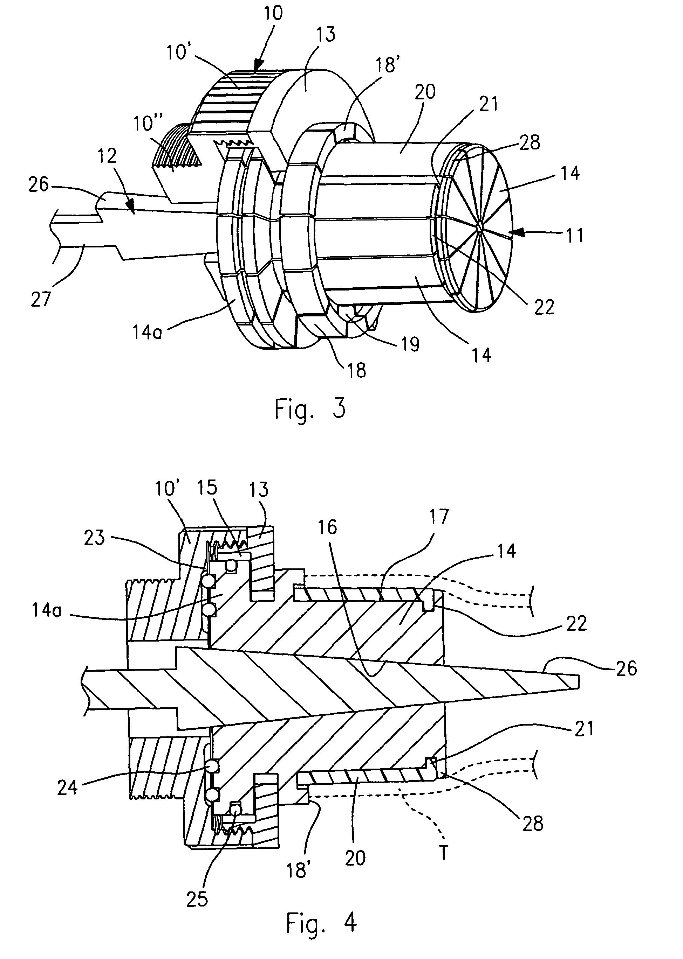

As shown in figures 1 to 4, the shaping tool according to this invention comprises a support body 10 having a longitudinal axis, which supports a radially expandable expander 11 axially extending from the same support body 10, ending with a front end for insertion of a pipe or plastic tubular element T, as shown in Fig. 4.

The tool also comprises a wedge member 12, which axially slides in the expander 11 to cause radial dilation thereof between a contracted condition, shown in Fig. 1, and an expanded condition, shown in Fig. 4, in such a way as to give a bell shape to the end of the plastic pipe T, as explained below.

The support body 10, which has an axial through hole for the wedge member 12, comprises a cup-shaped front part 10', into which an externally threaded ring nut 13 is screwed, and also comprises an externally threaded rear extension 10", for screwingly connecting the tool with an actuator (not shown) for thrusting or drawing the wedge member 12.

The expander 11 in turn comprises a plurality of expansion sectors 14, having a triangularly shaped cross section and a substantially triangular, divergent or convergent, longitudinal section, which extend axially from body 10, starting from an annular chamber 15 defined between threaded ring nut 13 and cup-shaped part 10' of body 10 itself.

As better shown in figure 4, each expansion sector 14, having, as said, a substantially triangular longitudinal section, is provided with inner edge 16 and outer edge or surface 17 having a concave, respectively a convex cross profile, which, together with the correspondingly shaped edges of remaining expansion sectors 14 of expander 11, form an inner cone-shaped contact surface for the wedge member 12, diverging towards the support body 10, respectively an outer surface for deforming the pipe T, for example a cone-shaped surface which also diverges towards the body 10.

When the expansion sectors 14 define an outer cone-shaped surface, the inclination of the outer edges 17 in the longitudinal direction with respect to the longitudinal axis of the tool forms an angle a which is a few degrees less than angle β formed by inner edges 16 of expansion sectors 14. The angles a and β of the outer and inner surfaces, as well as the number of expansion sectors 14 may be anything, depending upon specific requirements and/or characteristics of pipes T and the type of bell to be shaped.

In general, the tool comprises a high number of expansion sectors 14, for example twelve, the single expansion sectors 14 having limited thickness, around a few millimetres, so that the various expansion sectors 14, very close to each other, form an outer surface which is as continuous as possible.

As said, the opening angle a of the outer surface may be equal to or less than opening angle β of the inner surface; by way of example, angle a may be between 0°, if cylindrical bells are to be shaped, and 5°, whereas inner angle β may be for example between 5° and 15°, or higher. In any case, angles a and βmust be chosen in a manner that, following to an axial sliding movement of wedge member 12 along a preset length, a radial expansion is obtained of the expansion sectors 14, such as to shape a bell with the required outline and dimensions.

According to this invention, at least part of the expansion sectors 14 have, at their rear end, a stop member 18 for the tubular element T, shaped with a front shoulder surface 18' against which the end of tubular element T, coaxially inserted onto the expander 11, stops.

In particular, each expansion sector 14 has a respective stop member 18 having an L-shaped longitudinal section, frontally ending with a front shoulder surface 18' which radially extends starting from a slot 19 of stop member 18 itself.

As shown in Fig. 3, slot 19 extends into stop members 18 along a circumference coaxial to the expander 11, forming an annular space open at the front, comprised between a rear extension of the outer surface of the expansion sectors 14 and the shoulder surface 18'.

According to this invention, the tool also comprises an elastically yieldable contact sleeve 20 for contacting the inner surface of tubular element T, which extends on the outer surface 17 of the expansion sectors 14 coaxially to the expander 11, and prolongs inside the slot 19 of the stop members 18, beyond the front shoulder surface 18'.

According to this invention, the contact sleeve 20 having this configuration allows to overcome the drawbacks of the known tools provided with an expander, since it allows to perform a controlled deformation of the ends of the pipes, in a circumferential and longitudinal direction, thereby forming a bell-shaped end having an even or uniform inner diameter, without any longitudinal indentations and/or scorings, such as to provide a large contact surface with a joint for a good seal to the fluid.

The contact sleeve 20 does, in fact, define a continuous contact surface with the inner surface of the pipe T to be deformed, and allows to exert a sufficient radial thrust for deforming the pipe also in the gaps created between the dilated expansion sectors, thanks to a limited yieldability of the same sleeve.

The fact that the contact sleeve 20 according to this invention extends inside the slot 19 of the stop members 18, beyond the front shoulder surface 18', allows to compensate for the natural longitudinal shortening of the sleeve 20 during its radial dilation; in this manner, when the contact sleeve 20 is dilated radially by expander 11 in the expanded condition, the same sleeve 20 axially extends however from the front end of expander 11 to the shoulder surface 18' at least, thereby allowing uniform deformation of the pipe T in a longitudinal direction and avoiding the formation of inner lips at the rear end of pipe T.

For this purpose, preferentially, the ratio between the length of the contact sleeve 20 and the length of the part of sleeve which extends into the slot 19 is, for example, comprised between 10 and 16.

The contact sleeve 20 according to this invention is preferentially of elastomeric material, such as polyurethane and similar materials, having a hardness comprised between 80 and 100 Shore A and a % extension for example comprised between 500 and 600.

In order to limit the yieldability of the sleeve 20, the ratio between its average radius and the thickness is preferentially comprised between 4 and 10.

The contact sleeve 20 is maintained in position on the expander 11 thanks to appropriate retaining means, such as, for example, an annular rib 21 provided inside the same sleeve at its front end, the rib 21 extending in an annular groove 22 correspondingly positioned on the outer surface at the front end of the expansion sectors 14.

In order to allow a radial movement of the expansion sectors 14, maintaining their position basically parallel to the longitudinal axis of the tool, and also to reduce sliding frictions, the individual expansion sectors 14 are duly guided.

For example, as shown in figure 4, each expansion sector 14 has a rear arm 14a extending at a right-angle to the axis of the tool, which can slide along a radial guide 23 provided on the inner side of the cup-shaped part 10' of support body 10. In order to further reduce the sliding frictions, a bearing or rolling sphere means are provided between the arm 14a of each expansion sector 14 and the guide 23, basically consisting of two spheres 24 partially housed in seats on the rear edge of the arm 14a; a spring means consisting, for example, of an annular elastic member 25, of steel or elastomeric material, is housed in suitable slots at the ends of arms 14a of expansion sectors 14, the spring means tending to maintain or biasing the expansion sectors 14 towards their radially contracted position of figure 1, or returning them to such position after the expansion shown in figure 4.

With reference to figures 3 and 4, the wedge member 12 has a cone-shaped head 26 which extends backwards, through the cone-shaped hole defined by inner edges 16 of expansion sectors 14, with a shank 27 ending with a duly shaped tang for connecting the wedge member 12 to a linear control actuator.

The cone-shaped head 26 of the wedge member has an opening angle which is basically equal to angle β of the cone-shaped surface defined by inner edges 16 of expansion sectors 14, or several degrees higher, in order to reduce the length of the contacting parts, during axial sliding of the same wedge member 12.

Preferentially, for the purpose of greater resistance of expansion sectors 14, the head 26 of the wedge member 12 and the inner surface 16 of expansion sectors 14 have a taper diverging from the front end of expander 11 towards support body 10.

Preferentially, gripping teeth 28 are provided at the front end of expansion sectors 14, which penetrate partially into the inner part of pipe T, holding it axially, thereby avoiding the pipe slipping out accidentally during formation of the bell.

The operation of the tool for bell-shaping the ends of plastic pipes is briefly the following: the expander 11 of the tool is initially in the contracted condition of figures 1 and 2, with expansion sectors 14 in close position, and with the wedge member 12 in a totally retracted position.

With the tool in these conditions, the expander 11 provided with the contact sleeve 20 is inserted into the end of pipe T to be shaped into a bell; at this point, the control actuator is driven in order to move forward the wedge member 12. The axial sliding of wedge member 12 in turn causes radial expansion of the expansion sectors 14 and consequently of the contact sleeve 20 against the inner surface of pipe T.

The continued forward movement of wedge member 12 causes progressive expansion of expansion sectors 14 and simultaneously bell-shaped deformation of the end of the pipe, as shown in figure 4. At this point, once the end of the pipe has been perfectly shaped into a bell, wedge member 12 is made to move backwards while spring 25 moves back the expansion sectors 14 into the contracted position of figures 1 and 2. The tool is then ready for a new use.

## Claims

1. A shaping tool for bell-shaping the ends of plastic tubular elements (T), the tool comprising:
- a support body (10) having a longitudinal axis;
- a radially expandable expander (11), axially extending from the support body (10) and ending with a front end for insertion of a tubular element (T), and
- a wedge member (12) axially sliding in the expander (11), the wedge member (12) having a cone-shaped surface conformed to dilate the expander (11) between a contracted condition and an expanded condition;
said expander (11) comprising a plurality of angularly spaced apart expansion sectors (14), shaped to form an outer surface for deforming the tubular element (T), and a conical inner surface for contacting the wedge member (12),
**characterised in that** at least part of the expansion sectors (14) have a rear stop member (18) for the tubular element (T), the stop member (18) being shaped with a front shoulder surface (18') radially extending from a slot (19) of the stop member (18), the slot (19) extending along a circumference coaxially to the expander (11); and
by comprising an elastically yieldable contact sleeve (20) for contacting the inner surface of the tubular element (T), the contact sleeve (20) extending on said outer surface of the expansion sectors (14) coaxially to the expander (11), said contact sleeve (20) extending inside the slot (19) of said stop members (18), beyond the front shoulder surface (18').

2. A shaping tool according to claim 1, **characterised in that** the contact sleeve (20) is of elastomeric material.

3. A shaping tool according to claim 2, **characterised in that** the contact sleeve (20) is of polyurethane.

4. A shaping tool according to claim 2, **characterised in that** the elastomeric material of the contact sleeve (20) has hardness comprised between 80 and 100 Shore A and % extension comprised between 500 and 600.

5. A shaping tool according to any of the previous claims, **characterised in that** the contact sleeve (20) has a ratio between its average radius and thickness comprised between 4 and 10.

6. A shaping tool according to any of the previous claims, **characterised in that** the ratio between the length of the contact sleeve (20) and the length of the part of the sleeve (20) which extends into the slot (19) is comprised between 10 and 16.

7. A shaping tool according to claim 1, **characterised by** comprising retaining means (21, 22) for retaining said contact sleeve (20) on the expander (11).

8. A shaping tool according to claim 7, **characterised in that** said retaining means comprise an annular rib (21) inside the contact sleeve (20) at its front end, said annular rib (21) extending into an annular groove (22) on the outer surface of the expansion sectors (14).

9. A shaping tool according to any of the previous claims, **characterised by** comprising sliding means shaped to radially guide each expansion sector (14), said sliding means comprising, for each expansion sector (14), a side arm (14a), sliding in a radial guide (23) of the support body (10), and also rolling sphere means (24) positioned between the side arm (14a) of each expansion sector (14) and the radial sliding guide (23).

10. A shaping tool according to any of the previous claims, **characterised in that** each expansion sector (14) has a gripping tooth (28) for the pipe, at its front end.

## Patentansprüche

1. Ein Formwerkzeug für das glockenförmige Formen der Enden von aus Plastik bestehenden röhrenförmigen Elementen (T); das Werkzeug umfasst:
- einen Hilfskörper (10) mit einer longitudinalen Achse;
- einen sternförmigen erweiterbaren Expander (11), achsparallel erweiternd vom Hilfskörper (10) und mit einem frontalen Ende für das Einfügen von röhrenförmigen Elementen (T) endend, und
- ein Keilelement (12), achsparallel gleitend in den Expander (11), wobei das Keilelement (12) eine kegelförmige Oberfläche hat, so ausgerichtet, dass der Expander (11) sich zwischen einem zusammen gezogenen und einem erweiterten Zustand richtet;
besagter Expander (11) umfasst eine Vielfalt von eckig beabstandeten Ausdehnungssektoren (14), so geformt, dass es eine Außenfläche für das Deformieren des röhrenförmigen Elements (T) und eine konische Innenfläche für den Kontakt zum Keilelement (12) hat,
**dadurch gekennzeichnet, dass** mindestens einer der Ausdehnungssektoren (14) eine Rückbremse (18) für das röhrenförmige Element (T) hat, wobei die Rückbremse (18) mit einer frontalen Schulterfläche (18`) geprägt ist, radial ausdehnend von einem Schlitz (19) der Rückbremse (18), wobei der Schlitz (19) sich mit dem Umfang koaxial zu dem Expander (11) ausdehnt;
und umfassend eine elastische nachgiebige Kontakthülse (20) für den Kontakt zur Innenfläche des röhrenförmigen Elements (T), wobei die Kontakthülse (20) sich auf besagter Außenfläche der Ausdehnungssektoren (14) koaxial zum Expander (11) ausdehnt, besagte Kontakthülse (20) dehnt sich über der frontalen Schulterfläche (18`) in den Schlitz (19) der besagten Rückbremse (18) aus.

2. Ein Formwerkzeug gemäß Anspruch 1, **dadurch gekennzeichnet, dass** die Kontakthülse (20) aus einem elastomeren Material besteht.

3. Ein Formwerkzeug gemäß Anspruch 2, **dadurch gekennzeichnet, dass** die Kontakthülse (20) aus Polyurethan besteht.

4. Ein Formwerkzeug gemäß Anspruch 2, **dadurch gekennzeichnet, dass** das elastomere Material der Kontakthülse (20) eine Härte zwischen 80 und 100 Shore A und eine % Ausdehnung zwischen 500 und 600 umfasst.

5. Ein Formwerkzeug gemäß vorhergehenden Ansprüchen, **dadurch gekennzeichnet, dass** die Kontakthülse (20) ein durchschnittlicher Radius zu Dicke Verhältnis zwischen 4 und 10 ist.

6. Ein Formwerkzeug gemäß vorhergehenden Ansprüchen, **dadurch gekennzeichnet, dass** das Verhältnis zwischen der Länge der Kontakthülse (20) und der Länge des Abschnitts der Hülse (20), die sich in den Schlitz (19) ausdehnt, zwischen 10 und 16 ist.

7. Ein Formwerkzeug gemäß Anspruch 1, **dadurch gekennzeichnet, dass** Haltemittel (21, 22) für das Halten der besagten Kontakthülse (20) auf dem Expander umfasst sind.

8. Ein Formwerkzeug gemäß Anspruch 7, **dadurch gekennzeichnet, dass** die besagten Haltemittel (21, 22) eine ringförmige Rippe (21) am vorderen Ende in der Kontakthülse umfassen, wobei sich die besagte ringförmige Rippe (21) in eine ringförmige Furche (22) auf der Außenfläche der Ausdehnungssektoren (14) ausdehnt.

9. Ein Formwerkzeug gemäß vorhergehenden Ansprüchen, **dadurch gekennzeichnet, dass** Schiebeelemente so geformt sind, dass diese jeden Ausdehnungssektor (14) radial führen, wobei besagte Schiebeelemente für jeden Ausdehnungssektor (14) einen Seitenarm (14a), der in einer radialen Führung (23) des Hilfskörper (10) gleitet, umfassen, und ebenso rollende Kugelkörper (24), die zwischen dem Seitenarm (14a) des jeweiligen Ausdehnungssektors (14) und der radialen Schiebeführung (23) positioniert sind.

10. Ein Formwerkzeug gemäß vorhergehenden Ansprüchen, **dadurch gekennzeichnet, dass** jeder Ausdehnungssektor (14) am vorderen Ende einen Greifzahn (28) für das Rohr umfasst.

## Revendications

1. Outil de formage pour évaser les extrémités d'éléments tubulaires en matériau synthétique (T), l'outil comprenant :
- un corps de support (10) ayant un axe longitudinal ;
- un dispositif d'élargissement pouvant être élargi de manière radiale (11), s'étendant de manière axiale depuis le corps de support (10) et se terminant par une extrémité frontale destinée à l'insertion d'un élément tubulaire (T), et
- un élément de coin (2) coulissant de manière axiale dans le dispositif d'élargissement (11), l'élément de coin (12) présentant une surface en forme de cône configurée pour dilater le dispositif d'élargissement (11) entre un état contracté et un état déployé ;
ledit dispositif d'élargissement (11) comprenant une pluralité de secteurs d'élargissement espacés les uns des autres de manière angulaire (14), façonnés de manière à former une surface externe destinée à déformer l'élément tubulaire (T), et une surface interne conique pour permettre le contact avec l'élément de coin (12),
**caractérisé en ce qu'**au moins une partie des secteurs d'élargissement (14) présentent un élément arrière d'arrêt (18) pour l'élément tubulaire (T), l'élément d'arrêt (18) étant façonné de manière à présenter une surface d'épaulement frontale (18') s'étendant de manière radiale à partir d'une fente (19) de l'élément d'arrêt (18), la fente (19) s'étendant le long d'une circonférence de manière coaxiale par rapport au dispositif d'élargissement (11) ; et
**en ce qu'**il comprend un manchon de contact (20) pouvant être déformé de manière élastique pour entrer en contact avec la surface interne de l'élément tubulaire (T), le manchon de contact (20) s'étendant sur ladite surface externe des secteurs d'élargissement (14) de manière coaxiale par rapport au dispositif d'élargissement (11), ledit manchon de contact (20) s'étendant à l'intérieur de la fente (19) desdits éléments d'arrêt (18), au-delà de la surface d'épaulement frontal (18').

2. Outil de formage selon la revendication 1, **caractérisé en ce que** le manchon de contact (20) est constitué d'un matériau élastomère.

3. Outil de formage selon la revendication 2, **caractérisé en ce que** le manchon de contact (20) est en polyuréthane.

4. Outil de formage selon la revendication 2, **caractérisé en ce que** le matériau élastomère du manchon de contact (20) a une dureté comprise entre 80 et 100 Shore A et un % d'extension compris entre 500 et 600.

5. Outil de formage selon l'une quelconque des revendications précédentes, **caractérisé en ce que** le manchon de contact (20) a un rapport entre son rayon moyen et son épaisseur compris entre 4 et 10.

6. Outil de formage selon l'une quelconque des revendications précédentes, **caractérisé en ce que** le rapport entre la longueur du manchon de contact (20) et la longueur de la partie de manchon (20) qui s'étend dans la fente (19) est compris entre 10 et 16.

7. Outil de formage selon la revendication 1, **caractérisé en ce qu'**il comprend des moyens de retenue (21, 22) pour retenir ledit manchon de contact (20) sur le dispositif d'élargissement (11).

8. Outil de formage selon la revendication 7, **caractérisé en ce que** lesdits moyens de retenue comprennent une nervure annulaire (21) à l'intérieur du manchon de contact (20) au niveau de son extrémité frontale, ladite nervure annulaire (21) s'étendant dans un sillon annulaire (22) sur la surface externe des secteurs d'élargissement (14).

9. Outil de formage selon l'une quelconque des revendications précédentes, **caractérisé en ce qu'**il comprend des moyens coulissants façonnés pour guider de manière radiale chaque secteur d'élargissement (14), lesdits moyens coulissant comprenant, pour chaque secteur d'élargissement (14), un bras latéral (14a) coulissant dans un guide radial (23) du corps de support (10) et, également, des moyens de roulement à billes (24) positionnés entre le bras latéral (14a) de chaque secteur d'élargissement (14) et le guide coulissant radial (23).

10. Outil de formage selon l'une quelconque des revendications précédentes, **caractérisé en ce que** chaque secteur d'élargissement (14) présente une dent de préhension (28) pour le tube, au niveau de son extrémité frontale.
